# EUROPEAN PATENT SPECIFICATION

(11) **EP 1 846 477 B1**
(45) Date of publication and mention of the grant of the patent: **09.03.2016**
(21) Application number: 05823901.3
(22) Date of filing: 21.12.2005
(51) Int. Cl.: C08G 73/02, C08F 283/00, C08F 290/06, D21H 17/45

(54) **POLYMER DISPERSION AND PROCESS FOR PREPARING A POLYMER DISPERSION**
POLYMERDISPERSION UND VERFAHREN ZUR HERSTELLUNG EINER POLYMERDISPERSION
DISPERSION POLYMÈRE ET PROCÉDÉ DE PRÉPARATION D'UNE DISPERSION POLYMÈRE

(30) Priority: 28.12.2004 EP 04107023
(43) Date of publication of application: 24.10.2007
(73) Proprietor: Kemira Oyj, 00180 Helsinki (FI); Fraunhofer-Gesellschaft zur Förderung der angewandten Forschung e.V., 80686 München (DE)
(72) Inventor: HAHN, Mathias, 14557 Wilhelmshorst (DE); JAEGER, Werner, 14532 Kleinmachnow (DE); LASCHEWSKY, André, 14469 Potsdam (DE); PAULKE, Bernd, 14469 Potsdam (DE); PRZYBYLA, Christian, 47051 Duisburg (DE); SIEGER, Achim, 04736 Waldheim (DE)
(74) Representative: Tognetty, Virpi Maria
(86) International application number: PCT/SE2005/002004
(87) International publication number: WO 2006/071181

(56) References cited:
- WO-A-00/14124
- WO-A-03/097703

## Description

The present invention relates to a process for preparing an aqueous polymer dispersion. It also relates to a process for preparing a polymeric stabiliser, a polymeric stabiliser, an aqueous polymer dispersion, the use of the polymer dispersion and a process for producing paper.

### Background of the invention

Aqueous dispersions of cationic polymers are, for example, used as retention aids in paper manufacturing industry. Other uses are, for example, as flocculants for treating wastewater, as thickeners, and soil improving agents. Generally, these polymer dispersions comprise a dispersed polymer and a dispersant, also called stabiliser, which is usually a polymeric dispersant. The stabiliser stabilises the polymer dispersion in such a way that the dispersed polymer is kept in a dispersed state.

These polymer dispersions are generally prepared by polymerising a reaction mixture of water-soluble monomers in the presence of a first stabiliser acting as a dispersant and a second "co-stabiliser", which acts as a precipitating agent. Finished polymer will precipitate out and form a stable polymer dispersion. By this no significant amount of inorganic salt is present.

There are a number of criteria that the polymer dispersion should fulfil to give good results in the final application and be of commercial interest. Such criteria are, for example, the process viscosity, active content, stability, good retention and dewatering properties, and easiness of preparing the polymer dispersion including preparing the dispersant. Also, criteria such as environmental and safety aspects are of importance.

By process viscosity is meant the viscosity of the reaction mixture when producing the polymer dispersion. The viscosity should be kept low and viscosity peaks should be avoided, or at least reduced as much as possible, during the production of the polymer dispersion.

There is also desirable that the final viscosity of the polymer dispersion is as low as possible for a certain polymer content for easier handling at use, e.g. pumpability.

The shelf life of the dispersion, i.e., the stability of the polymer dispersion over time, is an important property. An efficient stabiliser is needed for keeping the polymer particles stable in dispersion without settling as sediment.

A further important factor to consider is the active content, i.e., the amount of dispersed polymer in the polymer dispersion. A higher active content gives lower transportation costs and easier handling at the end-application. By using an efficient stabiliser, dispersions with a higher active content can be obtained at the same time the viscosity can be kept low. However, it may be difficult to combine a high active content with good performance in retention and dewatering in a papermaking process.

The cationic charge of a dispersed polymer affects its ability to form stable dispersions. There exist reasons for providing stable polymer dispersions with a comparatively low cationic charge. Such reasons are, for example, FDA limits of cationic monomers for certain use, cost, risk of overcharging the cellulosic suspension when used in papermaking.

During preparation of a polymer dispersion, deposits of polymer may form and stick to the reaction vessel and stirrer. This leads to time consuming cleaning procedures of the reaction equipment.

WO03/097703 A1 discloses a polymer dispersion comprising a polymeric stabiliser and also a cationic polyelectrolyte as co-stabiliser. US 6075089 discloses a stabiliser which is a graft copolymer.

When preparing polymer dispersions according to above, stabilisers used in prior art processes have been ones prepared in advance. In, for example, WO 03/097703 A1 monomers are polymerised into a dispersed polymer in the presence of a pre-made stabiliser. Thus, the preparation of a stabiliser adds an extra step to the whole polymer dispersion preparation process, requiring time, equipment and leading to costs.

WO 00/14124 A1 discloses a method for the preparation of high molecular weight cationic water soluble polymers. The solution is to provide a cationic base polymer and to add a cross-linking agent in an amount enough to give a desired product viscosity. However, WO 00/14124A1 is not reciting that stability would be an issue.

It is an object of the present invention to provide a process for preparing a polymer dispersion which can be made in few steps and in which the process viscosity is kept low and smooth during preparation without any large viscosity peaks, and which gives no deposits. There is a further object of the present invention to provide a polymer dispersion having high stability, comparatively low cationic charge, high active content without too high viscosity, and which at the same time gives good retention and dewatering when used in papermaking processes. There is also an object of the present invention to provide a polymeric stabiliser.

### The invention

According to the invention it has surprisingly been found that a stable polymer dispersion having high active content of a dispersed polymer and low process viscosity can be achieved by a process for preparing an aqueous polymer dispersion according to the present invention. The process comprises reacting, in the presence of a polymeric cationic co-stabiliser (A), one or more monomers (m), and a polymer (B) of a monomer mixture comprising at least one monomer (x) having a primary, secondary or tertiary amine or amide group and at least one olefinic unsaturation, and, at least one cationic monomer (y) having at least one olefinic unsaturation, if a monomer having an amide group is used, the polymer has been hydrolysed to convert the amide functionality into an amine functionality.

By "stable polymer dispersion" is herein meant that there is suitably an even distribution of polymer particles in an aqueous solution having a shear viscosity at 1/s of below 10.000 mPa·s (Brookfield spindle 5). For being regarded as a "stable" dispersion, there should be less than about 5 weight % of sediment when centrifuging the dispersion at 3.000 rpm for 30 minutes, preferably less than about 1 weight %, calculated as based on dispersed polymer.

According to the invention there is also provided a polymer dispersion comprising: 1) a dispersed polymer comprising one or more monomer units originating from one or more monomers (m), and, 2) a polymeric cationic stabiliser (A) which is a polymer resulting from reaction of: a polymer of a monomer mixture comprising at least one monomer (x) having a primary, secondary or tertiary amine or amide group and at least one olefinic unsaturation, and, a cationic monomer (y) having at least one olefinic unsaturation, if a monomer having an amide group is used, the polymer has been hydrolysed to convert the amide functionality into an amine functionality and, one or more monomers (m), and, 3) a polymeric cationic co-stabiliser (A), as recited in claim 2. The polymer dispersion is suitably a water-soluble polymer dispersion.

The weight average molecular weight of the dispersed polymer is suitably from about 1.000.000 to about 15.000.000 g/mole, preferably from about 6.000.000 to about 9.000.000 g/mole.

According to the invention there is also provided a process for preparing a polymeric stabiliser (C) comprising: a) reacting a mixture comprising a cationic monomer (y) having at least one olefinic unsaturation and a monomer (x) having a primary, secondary or tertiary amine or amide group and at least one olefinic unsaturation, forming an intermediate polymer (B), if a monomer having an amide group is used, the intermediate polymer (B) is hydrolysed to convert the amide functionality into an amine functionality, and then, b) reacting the intermediate polymer, in the presence of a polymeric cationic co-stabiliser, with one or more monomers (m), forming the polymeric stabiliser (C), as recited in claim 1.

According to the invention there is also provided a polymeric stabiliser (C) being a graft copolymer, its backbone formed by monomers (y) and (x) and its grafted branches of monomer(s) (m). The grafted branches of the graft copolymer are suitably grafted onto monomer units (x). More specifically, the backbone of the polymeric stabiliser (C) comprises, in polymerised form, a cationic monomer (y) having at least one olefinic unsaturation and a monomer (x) having a primary, secondary or tertiary amine group and at least one olefinic unsaturation, its grafted branches comprising, in polymerised form, one or more monomers (m).

The aqueous polymer dispersion is suitably a salt-free dispersion. By "salt-free" is herein meant that no substantial amount of an inorganic salt, especially a polyvalent anionic inorganic salt, is present. By "no substantial amount" is herein suitably meant less than about 1 weight %, preferably less than about 0.5 weight %, most preferably less than about 0.1 weight %.

The Brookfield viscosity at 25°C (spindle 5 at 1 s⁻¹) of the polymer dispersion is suitably from about 100 to about 10.000 mPas, preferably from about 500 to about 5.000 mPas, most preferably from about 1.000 to about 3.000 mPas.

The monomers, (m) comprise a non-ionic monomer, (m₁), and a cationic monomer, (m₂). The non-ionic monomer, (m₁), is a monomer of the general formula (I): 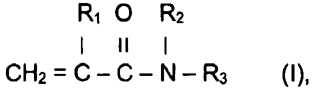 wherein R₁ is hydrogen or methyl, and R₂ and R₃ are, independently from each other, any of hydrogen, C₁-C₂ alkyl, isopropyl, methylol, hydroxyethylor hydroxypropyl, or the non-ionic monomer (m₁) is N-t-butylacrylamide or N-t-butylmethacrylamide. The (non-ionic) monomer (m₁) is suitably acrylamide, methacrylamide, N-isopropylacrylamide, N-isopropylmethacrylamide, N-t-butylacrylamide, N-t-butylmethacrylamide, N-methylolacrylamide, or N-methylolmethacrylamide.

The cationic monomer, (m₂), is a monomer of the general formula (II): 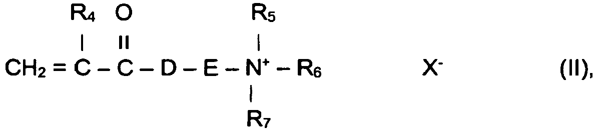 wherein R₄ is hydrogen or methyl, R₅, R₆ and R₇ are, independently from each other, any of hydrogen, C₁-C₈ alkyl or benzyl, D is oxygen or NH, E is C₂-C₄ alkyl or C₂-C₄ hydroxyalkyl, X⁻ is an anionic counterion, suitably a monovalent anion, e.g. chloride. The cationic monomer (m₂) is suitably acryloyl-oxyethyl-trimethylammoniumchloride (ADAM), acryloyloxyethyl-benzyldimethyl-ammoniumchloride (ADAM BQ), methacryloyloxyethyl-trimethylammoniumchloride (MADAM), methacryloyl-oxyethyl-benzyldimethylammonium-chloride (MADAM BQ), acrylamidopropyl-trimethylammoniumchloride (TMAPAA), acrylamidopropyl-benzyl-dimethylammoniumchloride (BDMAPAA), methacryl-amidopropyl-trimethylammonium-chloride (TMAPMA), or methacrylamidopropyl-benzyldimethylammoniumchloride (BDMAPMA).

The molar ratio between monomer (m₁) and monomer (m₂) is suitably from about 95:5 to about 50:50, preferably from about 92:8 to about 85:15.

The polymeric cationic co-stabiliser (A) is suitably a homo- or co-polymer of monomers m₂ of the general formula II. Examples of suitable co-stabilisers (A) are homo-and co-polymers of DADMAC, N-trimethylammoniumpropyl-acrylamide, acryloyloxyethyl-trimethyl-ammoniumchloride (ADAM MQ), acryloyloxyethyl-benzyl-dimethylammoniumchloride (ADAM BQ), methacryloylethyltrimethylammoniumchloride (MADAM MQ), vinylbenzyl-trimethyl-ammoniumchlorid and vinylpyridine. Preferably, the co-stabiliser is a homopolymer of DADMAC or N-trimethyl-ammoniumpropyl-acrylamide, optionally in combination with non-ionic monomers such as (meth)acrylamide. Further examples of suitable co-stabilisers (A) are polyethylenimine, polyvinylamine and polyamines. The polymeric cationic co-stabiliser (A) suitably has a weight average molecular weight of from about 1.000 to about 500.000 g/mole, preferably from about 2.000 to about 100.000 g/mole, most preferably from about 3.000 to about 20.000 g/mole. The co-stabiliser can also be a mixture of different polymeric cationic co-stabilisers with the above-mentioned molecular weight.

The monomer (x) is suitably selected from monomers of the general formula (III): 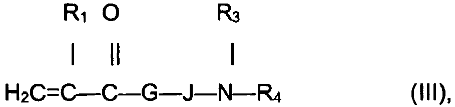 wherein R₁ is hydrogen or methyl, R₃ and R₄ are independently from each other hydrogen, C₁-C₈ alkyl, benzyl, alkylbenzyl, methyloyl, hydroxyethyl, 2-hydroxypropyl, or trismethylol, G is NH or oxygen, J is C₁-C₁₀ alkyl, C₁-C₁₀ hydroxyalkyl, or -(CH₂-CH₂-O-)ₙ-CH₂-CH₂- , n = 0, 1, 2, 3,...10, or, the monomer (x) is selected from the group of methyldiallylamine, vinylpyridine, vinylimidazole, or vinylbenzyldimethylamine. Preferably, the monomer (x) is diallylamine, diallylpropanolamine, N-vinylformamide, N-methyl-N-vinylformamide, or N-methyl-N-vinylacetamide.

The weight ratio amine or amide monomer (x) to cationic monomer (y) is suitably from about 0.1:100 to about 50:100, preferably from about 3:100 to about 10:100.

The olefinic unsaturation in cationic monomer (y) is suitably an alpha olefinic unsaturation, Preferably, the olefinic unsaturation is present as a vinyl or allyl group. The cationic monomer (y) is suitably selected from the group of cationic monomers m₂ or from diallyldimethylammonium chloride, N-methylvinylpyridinium chloride, N-methyl-N-vinylimidazolinium chloride, N-vinylbenzyl-trimethylammonium chloride. Preferably, the cationic monomer (y) is diallyldimethylammoniumchloride (DADMAC), N-trimethylammoniumpropyl-acrylamide, or acryloyloxyethyl-trimethyl-ammoniumchloride.

The polymer dispersion may also comprise further stabilisers such as polymeric stabilisers, e.g. cationic polymers. These cationic polymers may be homo- or co-polymers made up from at least one monomer belonging to the group of diallyldimethylammonium chloride (DADMAC), vinylpyridinium chloride, N-vinylimidazoline chloride, vinylbenzyltrimethylammonium chloride acryloyl-oxyethyl-trimethylammoniumchloride (ADAM-MQ), acryloyloxyethyl-benzyldimethyl-ammoniumchloride (ADAM-BQ), methacryloyloxyethyl-trimethylammoniumchloride (MADAM), methacryloyl-oxyethyl-benzyldimethyl-ammoniumchloride (MADAM-BQ), acrylamidopropyltrimethylammoniumchloride (TMAPAA), acrylamidopropyl-benzyl-dimethylammoniumchloride (BDMAPAA), methacryl-amidopropyl-trimethylammonium-chloride (TMAPMA), and methacrylamidopropyl-benzyldimethylammoniumchloride (BDMAPMA). Optionally, a further co-monomer can, for example, be a PEG acrylate or a block copolyether as described in WO 03/097703.

As polymerization initiators organic azo compounds, organic peroxides, inorganic peroxidisulfates, hydrogen peroxide or redox initiators may be used. Preferably, cationic azo compounds or inorganic peroxidisulfates are used.

The invention also relates to the use of the aqueous polymer dispersion herein described as retention and dewatering aid in paper manufacturing, as thickening agent and/or as soil improvement agent.

In a preferred embodiment of the invention, a copolymer of diallyl-dimethylammoniumchloride (DADMAC) and an amine monomer which is diallyl amine (DAA), or diallyl-2-propanolamine (DAPA) is made. A polymer dispersion is made by reacting the copolymer made with acrylamide and acryloxyethyl-dimethylbenzylammoniumchloride (ADAM BQ) in the presence of a DADMAC homopolymer.

Finally, the present invention relates to a process for the production of paper from an aqueous suspension containing cellulosic fibres, and optional fillers, which comprises adding to the suspension an aqueous polymer dispersion as described herein, forming and draining the suspension on a wire.

### Examples

### Example 1: A reference example describing the formation of polymer B

A diallyl-dimethylammoniumchloride (DADMAC) copolymer with 10 mole % diallyl-2-propanolamine (DAPA) was prepared in a lab-reactor by polymerising a mixture of 330 g of 65 weight % aqueous DADMAC solution, 24.1 g DAPA, 16.2 g hydrochloric acid (37 weight %) and 700 g additional water. The pH was adjusted with sodium hydroxide to about 4. The mixture was stirred at room temperature for 30 minutes along with nitrogen purge and then added with 4.3 g azo-initiator (V-50) dissolved in 25 ml water. The temperature was raised to about 50°C and the polymerisation continued for 6 hours. Finally, 6.58 g sodium hydroxide dissolved in 150 ml water was added. A DADMAC copolymer having a weight average molecular weight of 55.000 Dalton determined by GPC was achieved.

### Example 2: A reference example describing the formation of polymer B

A diallyl-dimethylammoniumchloride (DADMAC) copolymer with 3 mole % diallylamine (DAA) was prepared in a lab-reactor by polymerising a mixture of 1603 g of a 65 weight % aqueous DADMAC solution, 19.76 g DAA, 20.1 g hydrochloric acid (37 weight %) and 30 g of 1 weight % EDTA solution. The pH was adjusted with sodium hydroxide to about 4. The mixture was stirred at room temperature for 30 minutes along with nitrogen purge and then added during three hours with 3.5 g azo-initiator (V-50) dissolved in 60 ml water. The temperature was raised to about 50°C and the polymerisation continued for 22 hours. Next day 200 ml water was added and 5.25 g azo-initiator (V-50) dissolved in 70 ml water was added. The temperature was raised to 60°C and the polymerisation continued for 24 hours. The third day another 200 ml of water was added and 4.0 g azo-initiator (V-50) dissolved in 60 ml water was added. The temperature was kept at 60°C and the polymerisation continued for 24 hours. A DADMAC copolymer having a weight average molecular weight of 190.000 Dalton determined by GPC was achieved.

### Example 3: A reference example describing the formation of polymer B

A diallyl-dimethylammoniumchloride (DADMAC) copolymer with 10 mole % diallylamine (DAA) was also prepared in a lab-reactor by polymerising a mixture of 1092 g of a 65 weight % aqueous DADMAC solution, 45.4 g DAA, 49.9 g hydrochloric acid (37 weight %) and 30 g of 1 weight % EDTA solution. The pH was adjusted with sodium hydroxide to about 4. The mixture was stirred at room temperature for 30 minutes along with nitrogen purge and then added during five hours with 3.5 g azo-initiator (V-50) dissolved in 60 ml water. The temperature was raised to about 50°C and the polymerisation continued for 22 hours. Next day 400 ml water was added and 2.6 g azo-initiator (V-50) dissolved in 35 ml water was added. The temperature was raised to 60°C and after two hours another 2.6 g azo-initiator (V-50) dissolved in 35 ml water was added. After viscosity increase 200 ml water was added and the polymerisation was continued for 24 hours. The third day the temperature was raised to 80°C and 585 ml water was added. 3.5 g azo-initiator (V-50) dissolved in 60 ml water was added. At the end of the third day the mixture was cooled down. A DADMAC copolymer having a weight average molecular weight of 230.000 Dalton determined by GPC was achieved.

### Examples 4-6:

Polymer dispersions were prepared by polymerising monomer mixtures comprising acrylamide (AAm) and acryloxyethyl-dimethylbenzylammoniumchloride (ADAM BQ), in the presence of one of the DADMAC copolymer prepared in Examples 1-3.

Three mixtures were made each containing 7.1 crystalline AAm, 2.96 g (80 weight %) ADAM BQ, 3.0 g DADMAC copolymer made in Examples 1, 2 or 3, 10 g polyDADMAC (40 weight %) and 0.15 g hydrogen peroxide or 0.2 g sodium persulphate. Water was added up to 100 g and the reaction was allowed for some hours at 60°C while stirring.

Table 1 describes the dispersions according to examples. The viscosity was low for all dispersions. The dispersions were stable, i.e., no visible sedimentation when centrifuged for 30 minutes at 3000 rpm.

Application tests regarding retention and dewatering in papermaking processes were made by means of a Dynamic Drainage Analyser (DDA) available from Akribi, Sweden. The furnish used was based on 70 % by weight of bleached pulp and 30 % by weight of clay. The stock volume was 800 ml, the pulp concentration 4 g/L and the conductivity 1.5 mS/cm. The stock was stirred at a speed of 1500 rpm while the following was added to the stock: an anionic trash catcher (0.5 kg/t), polymer dispersion (1.0 kg/t) and finally anionic inorganic particles (0.5 kg/t). The temperature was 22.5°C. A vacuum of 0.35 bar was used for the analysis. The retention time (s) and turbidity (NTU) was measured.

**Table 1. Polymer dispersions and application tests**

| Example | DADMAC copolymer | Viscosity (mPas) | Application tests | | |
|---|---|---|---|---|---|
| | | | Polymer load (kg/t) | Retention time (s) | Turbidity (NTU) |
| 4 | Ex. 1 (10% DAPA) | 1000-1500 | 1.0 | 30.8 | 82 |
| 5 | Ex. 2 (3% DAA) | 1000-1500 | 1.0 | 31.5 | 77 |
| 6 | Ex. 3 (10% DAA) | 1000-1500 | 1.0 | 29.4 | 75 |

It is concluded that the dispersions using dispersants according to the invention show good results in retention and dewatering.

## Claims

1. Process for preparing a polymer dispersion comprising reacting, in the presence of a polymeric cationic co-stabiliser (A), one or more monomers (m), comprising a non-ionic monomer, (m₁), and a cationic monomer, (m₂), and a polymer (B) of a monomer mixture comprising at least one monomer (x) having a primary, secondary or tertiary amine or amide group and at least one olefinic unsaturation, and, at least one cationic monomer (y) having at least one olefinic unsaturation, if a monomer having an amide group is used, the polymer has been hydrolysed to convert the amide functionality into an amine functionality,
wherein
the non-ionic monomer, (m₁), is a monomer of the general formula (I): 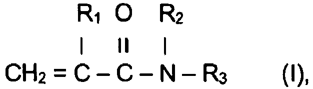 wherein R₁ is hydrogen or methyl, and R₂ and R₃ are, independently from each other, any of hydrogen, C₁-C₂ alkyl, isopropyl, methylol, hydroxyethyl or hydroxypropyl, or the non-ionic monomer (m₁) is N-t-butylacrylamide or N-t-butylmethacrylamide,
the cationic monomer, (m₂), is a monomer of the general formula (II): 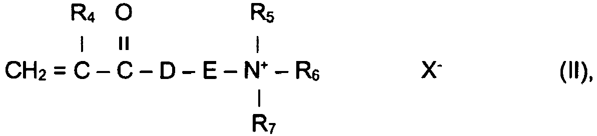 wherein R₄ is hydrogen or methyl, R₅, R₆ and R₇ are, independently from each other, any of hydrogen, C₁-C₈ alkyl or benzyl, D is oxygen or NH, E is C₂-C₄ alkyl or C₂-C₄ hydroxyalkyl, X⁻ is an anionic counterion, and
monomer (x) is selected from diallylamine and diallylpropanolamine; and the cationic monomer (y) is selected from diallyldimethylammonium chloride.

2. Polymer dispersion comprising:
a) a dispersed polymer comprising one or more monomer units originating from one or more monomers (m), comprising a non-inonic monomer, (m₁), and a cationic monomer, (m₂), and,
b) a polymeric stabiliser (C) which is a polymer resulting from reaction of:
i) a polymer (B) of a monomer mixture comprising at least one monomer (x) having a primary, secondary or tertiary amine or amide group and at least one olefinic unsaturation, and, a cationic monomer (y) having at least one olefinic unsaturation, if a monomer having an amide group is used, the polymer has been hydrolysed to convert the amide functionality into an amine functionality, and,
ii) one or more monomers (m) comprising a non-inonic monomer, (m₁), and a cationic monomer, (m₂), and;
c) a polymeric cationic co-stabiliser (A).
wherein
the non-ionic monomer, (m₁), is a monomer of the general formula (I): 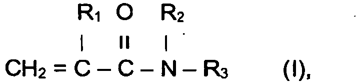 wherein R₁ is hydrogen or methyl, and R₂ and R₃ are, independently from each other, any of hydrogen, C₁-C₂ alkyl, isopropyl, methylol, hydroxyethyl or hydroxypropyl, or the non-ionic monomer (m₁) is N-t-butylacrylamide or N-t-butylmethacrylamide,
the cationic monomer, (m₂), is a monomer of the general formula (II): 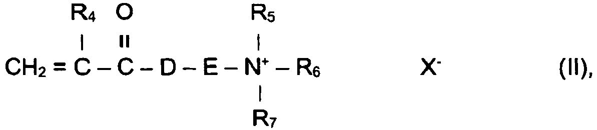 wherein R₄ is hydrogen or methyl, R₅, R₆ and R₇ are, independently from each other, any of hydrogen, C₁-C₈ alkyl or benzyl, D is oxygen or NH, E is C₂-C₄ alkyl or C₂-C₄ hydroxyalkyl, X⁻ is an anionic counterion, and
monomer (x) is selected from diallylamine and diallylpropanolamine; and the cationic monomer (y) is selected from diallyldimethylammonium chloride.

3. A polymer dispersion according to claim 2, wherein the non-ionic monomer (m₁) is acrylamide, methacrylamide, N-isopropylacrylamide, N-isopropylmethacrylamide, N-t-butylacrylamide, N-t-butylmethacrylamide, N-methylolacrylamide, or N-methylolmethacrylamide.

4. A polymer dispersion according to any one of claims 2 and 3, wherein the cationic monomer (m₂) is acryloyloxyethyl-trimethylammoniumchloride (ADAM), acryloyloxyethylbenzyldimethyl-ammoniumchloride (ADAMBQ), methacryloyloxyethyltrimethylammoniumchloride (MADAM), methacryloyloxyethylbenzyldimethylammoniumchloride (MADAMBQ), acrylamidopropyltrimethylammoniumchloride (TMAPAA), acrylamidopropylbenzyldimethylammoniumchloride (BDMAPAA), methacrylamidopropyltrimethylammoniumchloride (TMAPMA), or methacrylamidopropylbenzyldimethylammoniumchloride (BDMAPMA).

5. A polymer dispersion according to any one of claims 2-4, wherein the molar ratio between monomer (m₁) and monomer (m₂) is from 95:5 to 50:50.

6. A polymer dispersion according to any one of claims 2-5, wherein the molar ratio between monomer (m₁) and monomer (m₂) is from 92:8 to 85:15.

7. or A polymer dispersion according to any one of claims 2 -6, wherein the weight ratio amine or amide monomer (x) to cationic monomer (y) is from 0.1:100 to 50:100.

8. A polymer dispersion according to any one of claims 2-7, wherein the polymeric co-stabiliser is poly-diallyldimethylammoniumchloride.

9. A polymer dispersion according to any one of claims 2-8, wherein the polymeric co-stabiliser has a weight average molecular weight from 3,000 to 20,000 g/mole.

10. A polymer dispersion according to any one of claims 2 -9, wherein a further polymeric stabiliser is present.

11. Polymer dispersion according to any one of claims 2 -10, wherein the weight average molecular weight of the dispersed polymer is from 1.000.000 to 15.000.000 g/mole.

12. Use of a polymer dispersion according to any one of the claims 2-11 as retention aid in paper manufacturing, dewatering aid in paper manufacturing, as thickening agent or as soil improvement agent.

13. A process for the production of paper from an aqueous suspension containing cellulosic fibres, and optional fillers, which comprises adding to the suspension a polymer dispersion according to any one of claims 2-11, forming and draining the suspension on a wire.

## Patentansprüche

1. Verfahren zur Herstellung einer Polymerdispersion, bei dem man in Gegenwart eines polymeren kationischen Costabilisators (A) ein oder mehrere Monomere (m), die ein nichtionisches Monomer (m₁) und ein kationisches Monomer (m₂) umfassen, und ein Polymer (B) aus einer Monomerenmischung, die mindestens ein Monomer (x) mit einer primären oder sekundären oder tertiären Amin- oder Amidgruppe und mindestens einer olefinischen Ungesättigtheit und mindestens ein kationisches Monomer (y) mit mindestens einer olefinischen Ungesättigtheit) umfasst, umsetzt, wobei bei Verwendung eines Monomers mit einer Amidgruppe das Polymer zur Umwandlung der Amidfunktionalität in eine Aminfunktionalität hydrolysiert worden ist,
wobei es sich bei dem nichtionischen Monomer (m₁) um ein Monomer der allgemeinen Formel (I) handelt: 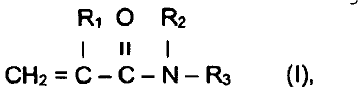 wobei R₁ für Wasserstoff oder Methyl steht und R₂ und R₃ unabhängig voneinander für Wasserstoff, C₁-C₂-Alkyl, Isopropyl, Methylol, Hydroxyethyl oder Hydroxypropyl stehen, oder es sich bei dem nichtionischen Monomer (m₁) um N-t-Butylacrylamid oder N-t-Butylmethacrylamid handelt,
es sich bei dem kationischen Monomer (m₂) um ein Monomer der allgemeinen Formel (II) handelt: 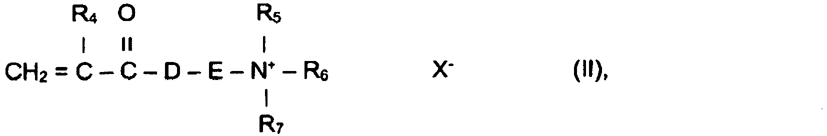 wobei R₄ für Wasserstoff oder Methyl steht, R₅, R₆ und R₇ unabhängig voneinander für Wasserstoff, C₁-C₈-Alkyl oder Benzyl stehen, D für Sauerstoff oder NH steht, E für C₂-C₄-Alkyl oder C₂-C₄-Hydroxyalkyl steht und X⁻ für ein anionisches Gegenion steht, und
das Monomer (x) aus Diallylamin und Diallyl-propanolamin ausgewählt ist und das kationische Monomer (y) aus Diallyldimethylammoniumchlorid ausgewählt ist.

2. Polymerdispersion, umfassend:
a) ein dispergiertes Polymer, umfassend eine oder mehrere Monomereinheiten, die sich von einem oder mehreren Monomeren (m), die ein nichtionisches Monomer (m₁) und ein kationisches Monomer (m₂) umfassen, ableiten, und
b) einen polymeren Stabilisator (C), bei dem es sich um ein Copolymer handelt, das sich aus der Umsetzung von:
i) einem Polymer (B) aus einer Monomerenmischung, die mindestens ein Monomer (x) mit einer primären oder sekundären oder tertiären Amin- oder Amidgruppe und mindestens einer olefinischen Ungesättigtheit und mindestens ein kationisches Monomer (y) mit mindestens einer olefinischen Ungesättigtheit) umfasst, wobei bei Verwendung eines Monomers mit einer Amidgruppe das Polymer zur Umwandlung der Amidfunktionalität in eine Aminfunktionalität hydrolysiert worden ist, und
ii) einem oder mehreren Monomeren (m), die ein nichtionisches Monomer (m₁) und ein kationisches Monomer (m₂) umfassen,
ergibt, und
c) einen polymeren kationischen Costabilisator (A),
wobei es sich bei dem nichtionischen Monomer (m₁) um ein Monomer der allgemeinen Formel (I) handelt: 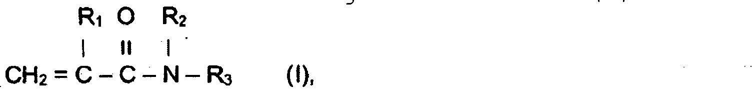 wobei R₁ für Wasserstoff oder Methyl steht und R₂ und R₃ unabhängig voneinander für Wasserstoff, C₁-C₂-Alkyl, Isopropyl, Methylol, Hydroxyethyl oder Hydroxypropyl stehen, oder es sich bei dem nichtionischen Monomer (m₁) um N-t-Butylacrylamid oder N-t-Butylmethacrylamid handelt,
es sich bei dem kationischen Monomer (m₂) um ein Monomer der allgemeinen Formel (II) handelt: 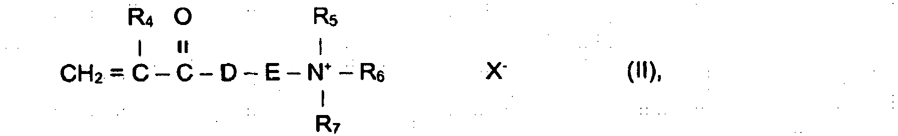 wobei R₄ für Wasserstoff oder Methyl steht, R₅, R₆ und R₇ unabhängig voneinander für Wasserstoff, C₁-C₈-Alkyl oder Benzyl stehen, D für Sauerstoff oder NH steht, E für C₂-C₄-Alkyl oder C₂-C₄-Hydroxyalkyl steht und X⁻ für ein anionisches Gegenion steht, und
das Monomer (x) aus Diallylamin und Diallyl-propanolamin ausgewählt ist und das kationische Monomer (y) aus Diallyldiemthylammoniumchlorid ausgewählt ist.

3. Polymerdispersion nach Anspruch 2, wobei es sich bei dem nichtionischen Monomer (m₁) um Acrylamid, Methacrylamid, N-Isopropylacrylamid, N-Isopropylmethacrylamid, N-t-Butylacrylamid, N-t-Butylmethacrylamid, N-Methylolacrylamid oder N-Methylolmethacrylamid handelt.

4. Polymerdispersion nach einem der Ansprüche 2 und 3, wobei es sich bei dem kationischen Monomer (m₂) um Acryloyloxyethyltrimethylammoniumchlorid (ADAM), Acryloyloxyethylbenzyldimethylammoniumchlorid (ADAMBQ), Methacryloyloxyethyltrimethylammoniumchlorid (MADAM), Methacryloyloxyethylbenzyldimethylammoniumchlorid (MADAMBQ), Acrylamidopropyltrimethylammoniumchlorid (TMAPAA), Acrylamidopropylbenzyldimethylammoniumchlorid (BDMAPAA), Methacrylamidopropyltrimethylammoniumchlorid (TMAPMA) oder Methacrylamidopropylbenzyldimethylammoniumchlorid (BDMAPMA) handelt.

5. Polymerdispersion nach einem der Ansprüche 2-4, wobei das Molverhältnis zwischen Monomer (m₁) und Monomer (m₂) 95:5 bis 50:50 beträgt.

6. Polymerdispersion nach einem der Ansprüche 2-5, wobei das Molverhältnis zwischen Monomer (m₁) und Monomer (m₂) 92:8 bis 85:15 beträgt.

7. Polymerdispersion nach einem der Ansprüche 2-6, wobei das Gewichtsverhältnis von Amin- oder Amid-Monomer (x) zu kationischem Monomer (y) 0,1:100 bis 50:100 beträgt.

8. Polymerdispersion nach einem der Ansprüche 2-7, wobei es sich bei dem polymeren Costabilisator um Poly-diallyldimethylammoniumchlorid handelt.

9. Polymerdispersion nach einem der Ansprüche 2-8, wobei der polymere Costabilisator ein gewichtsmittleres Molekulargewicht von 3000 bis 20.000 g/mol aufweist.

10. Polymerdispersion nach einem der Ansprüche 2-9, wobei ein weiterer polymerer Stabilisator vorliegt.

11. Polymerdispersion nach einem der Ansprüche 2-10, wobei das gewichtsmittlere Molekulargewicht des dispergierten Polymers 1.000.000 bis 15.000.000 g/mol beträgt.

12. Verwendung einer Polymerdispersion nach einem der Ansprüche 2-11 als Retentionsmittel bei der Papierherstellung, Entwässerungsmittel bei der Papierherstellung, Verdicker oder Bodenverbesserungsmittel.

13. Verfahren zur Herstellung von Papier aus einer wässrigen Suspension, die Cellulosefasern und fakultative Füllstoffe enthält, bei dem man die Suspension mit einer Polymerdispersion nach einem der Ansprüche 2-11 versetzt und die Suspension unter Blattbildung auf einem Draht entwässert.

## Revendications

1. Procédé de préparation d'une dispersion de polymère comprenant la réaction, en présence d'un costabilisant cationique polymère (A), d'un ou plusieurs monomères (m), comprenant un monomère non ionique, (m₁), et un monomère cationique, (m₂), et d'un polymère (B) d'un mélange de monomères comprenant au moins un monomère (x) ayant un groupe amine ou amide primaire, secondaire ou tertiaire et au moins une insaturation oléfinique, et au moins un monomère cationique (y) ayant au moins une insaturation oléfinique, si un monomère ayant un groupe amide est utilisé, le polymère a été hydrolysé pour convertir la fonctionnalité amide en une fonctionnalité amine,
dans lequel
le monomère non ionique, (m₁), est un monomère de la formule générale (I) : 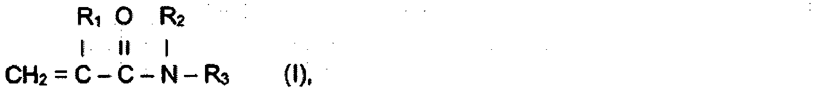 dans laquelle R₁ est un hydrogène ou un méthyle, et R₂ et R₃ sont, indépendamment l'un de l'autre, un hydrogène, un alkyle en C₁-C₂, un isopropyle, un méthylol, un hydroxyéthyle ou un hydroxypropyle, ou bien le monomère non ionique (m₁) est le N-t-butylacrylamide ou le N-t-butylméthacrylamide,
le monomère cationique, (m₂), est un monomère de la formule générale (II) : 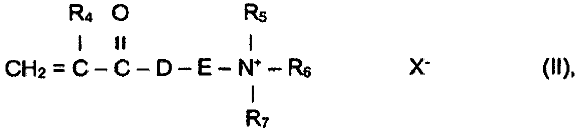 dans laquelle R₄ est un hydrogène ou un méthyle, R₅, R₆ et R₇ sont, indépendamment les uns des autres, un hydrogène, un alkyle en C₁-C₈ ou un benzyle, D est un oxygène ou NH, E est un alkyle en C₂-C₄ ou un hydroxyalkyle en C₂-C₄, X⁻ est un contre-ion anionique, et
le monomère (x) est choisi entre la diallylamine et la diallylpropanolamine ; et le monomère cationique (y) est choisi à partir du chlorure de diallyldiméthylammonium.

2. Dispersion de polymère comprenant :
a) un polymère dispersé comprenant un ou plusieurs motifs monomères provenant d'un ou plusieurs monomères (m), comprenant un monomère non ionique, (m₁), et un monomère cationique, (m₂), et
b) un stabilisant polymère (C) qui est un polymère résultant de la réaction de :
i) un polymère (B) d'un mélange de monomères comprenant au moins un monomère (x) ayant un groupe amine ou amide primaire, secondaire ou tertiaire et au moins une insaturation oléfinique, et un monomère cationique (y) ayant au moins une insaturation oléfinique, si un monomère ayant un groupe amide est utilisé, le polymère a été hydrolysé pour convertir la fonctionnalité amide en une fonctionnalité amine, et
ii) un ou plusieurs monomères (m) comprenant un monomère non ionique, (m₁), et un monomère cationique, (m₂), et
c) un costabilisant cationique polymère (A),
dans laquelle
le monomère non ionique, (m₁), est un monomère de la formule générale (I) : 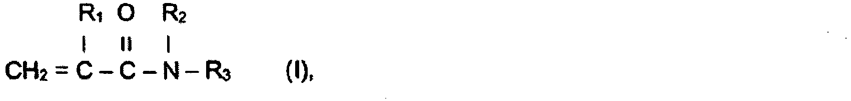 dans laquelle R₁ est un hydrogène ou un méthyle, et R₂ et R₃ sont, indépendamment l'un de l'autre, un hydrogène, un alkyle en C₁-C₂, un isopropyle, un méthylol, un hydroxyéthyle ou un hydroxypropyle, ou bien le monomère non ionique (m₁) est le N-t-butylacrylamide ou le N-t-butylméthacrylamide,
le monomère cationique, (m₂), est un monomère de la formule générale (II) : 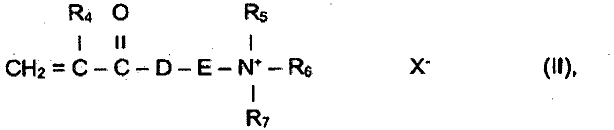 dans laquelle R₄ est un hydrogène ou un méthyle, R₅, R₆ et R₇ :sont, indépendamment les uns des autres, un hydrogène, un alkyle en C₁-C₈ ou un benzyle, D est un oxygène ou NH, E est un alkyle en C₂-C₄ ou un hydroxyalkyle en C₂-C₄, X⁻ est un contre-ion anionique, et
le monomère (x) est choisi entre la diallylamine et la diallylpropanolamine ; et le monomère cationique (y) est choisi à partir du chlorure de diallyldiméthylammonium.

3. Dispersion de polymère selon la revendication 2, dans laquelle le monomère non ionique (m₁) est l'acrylamide, le méthacrylamide, le N-isopropylacrylamide, le N-isopropylméthacrylamide, le N-t-butylacrylamide, le N-t-butylméthacrylamide, le N-méthylolacrylamide, ou le N-méthylolméthacrylamide.

4. Dispersion de polymère selon l'une quelconque des revendications 2 et 3, dans laquelle le monomère cationique (m₂) est le chlorure d'acryloyloxyéthyltriméthylammonium (ADAM), le chlorure d'acryloyloxyéthylbenzyldiméthylammonium (ADAMBQ), le chlorure de méthacryloyloxyéthyltriméthylammonium (MADAM), le chlorure de méthacryloyloxyéthylbenzyldiméthylammonium (MADAMBQ), le chlorure d'acrylamidopropyltriméthylammonium (TMAPAA), le chlorure d'acrylamidopropylbenzyldiméthylammonium (BDMAPAA), le chlorure de méthacrylamidopropyltriméthylammonium (TMAPMA), ou le chlorure de méthacrylamidopropylbenzyldiméthylammonium (BDMAPMA).

5. Dispersion de polymère selon l'une quelconque des revendications 2 à 4, dans laquelle le rapport molaire entre le monomère (m₁) et le monomère (m₂) est de 95:5 à 50:50.

6. Dispersion de polymère selon l'une quelconque des revendications 2 à 5, dans laquelle le rapport molaire entre le monomère (m₁) et le monomère (m₂) est de 92:8 à 85:15.

7. Dispersion de polymère selon l'une quelconque des revendications 2 à 6, dans laquelle le rapport pondéral du monomère d'amine ou d'amide (x) au monomère cationique (y) est de 0,1:100 à 50:100.

8. Dispersion de polymère selon l'une quelconque des revendications 2 à 7, dans laquelle le costabilisant polymère est le chlorure de polydiallyldiméthylammonium.

9. Dispersion de polymère selon l'une quelconque des revendications 2 à 8, dans laquelle le costabilisant polymère a un poids moléculaire moyen en poids de 3000 à 20 000 g/mole.

10. Dispersion de polymère selon l'une quelconque des revendications 2 à 9, dans laquelle un autre stabilisant polymère est présent.

11. Dispersion de polymère selon l'une quelconque des revendications 2 à 10, dans laquelle le poids moléculaire moyen en poids du polymère dispersé est de 1 000 000 à 15 000 000 g/mole.

12. Utilisation d'une dispersion de polymère selon l'une quelconque des revendications 2 à 11 comme adjuvant de rétention dans la fabrication du papier, adjuvant de déshydratation dans la fabrication du papier, comme épaississant ou comme agent d'amélioration des sols.

13. Procédé de production de papier à partir d'une suspension aqueuse contenant des fibres cellulosiques et des charges facultatives, qui comprend l'ajout à la suspension d'une dispersion de polymère selon l'une quelconque des revendications 2 à 11, la formation et l'égouttage de la suspension sur un fil.
